# EUROPÄISCHE PATENTANMELDUNG

(11) **EP 4 564 204 A1**
(43) Veröffentlichungstag der Anmeldung: **04.06.2025**
(21) Anmeldenummer: 24215029.0
(22) Anmeldetag: 25.11.2024
(51) Int. Cl.: G06F 21/44, F24F 11/30

(54) **VERFAHREN ZUM BETREIBEN EINES HEIZGERÄTES, COMPUTERPROGRAMM, SPEICHERMEDIUM, REGEL- UND STEUERGERÄT, HEIZGERÄT UND VERWENDUNG EINES SIGNALS**

(30) Priorität: 28.11.2023 DE 102023133215
(71) Anmelder: Vaillant GmbH, 42859 Remscheid NRW (DE)
(72) Erfinder: Fahr, René, 50859 Köln (DE)
(74) Vertreter: Popp, Carsten

(57) **Zusammenfassung**

Verfahren zur Initiierung des Betriebs eines Wärmepumpensystems (7), mit zumindest einem Innengerät (2) zur Aufstellung in einem Gebäude (9) und einem Außengerät (1) außerhalb des Gebäudes (9), umfassend zumindest die folgenden Schritte:
a. Bereitstellen einer ersten Signatur (4) in dem Innengerät (2);
b. Speichern der ersten Signatur (4) auf einem ersten Speicher (13) des Innengeräts (2);
c. Generieren einer zweiten Signatur (5) aus der ersten Signatur (4) mit einer Recheneinheit (11) des Innengeräts (2);
d. Übertragen der zweiten Signatur (5) vom Innengerät (2) auf das Außengerät (1);
e. Speichern der zweiten Signatur (5) in einem zweiten Speicher (12) des Außengeräts (1),
wobei nach einer Durchführung der Schritte a. bis e. im Rahmen einer Inbetriebnahme des Wärmepumpensystems folgende Schritte durchgeführt werden:
A. Prüfen, ob erste Signatur (4) und zweite Signatur (5) übereinstimmen;
B. Blockieren des Betriebs des Wärmepumpensystems (7), wenn erste Signatur (4) und zweite Signatur (5) nicht übereinstimmen;
C. Ausgeben eines Hinweises, dass ein Betrieb des Wärmepumpensystems (7) blockiert ist.

## Beschreibung

Die Erfindung betrifft ein Verfahren zur Initiierung des Betriebs eines Wärmepumpensystems.

Zum Betrieb eines Wärmepumpensystems in einem Gebäude bedarf es zumindest eines Innengeräts und eines Außengeräts, die miteinander verbunden sind. Das Wärmepumpensystem kann ein sogenanntes Split-System sein. Das Außengerät eines Wärmepumpensystems ist zumeist leicht zugänglich aufgestellt, beispielsweise vor einem Gebäude oder in einem leicht zugänglichen Bereich auf einem (Freiluft)Grundstück. Das Innengerät ist regelmäßig im Innenbereich des Gehäuses positioniert und daher vor einem Zugriff durch Dritte gut geschützt.

Im Fall einer Störung, einer Aufrüstung oder einer Reparatur kann es erforderlich sein, wenigstens das Innengerät oder das Außengerät auszutauschen. Nach einer Demontage können Außengeräte ohne Weiteres direkt wieder an ein anderes Innengerät angeschlossen werden. Das Innengerät kann dabei ein Ersatzteil sein oder eines, an dem zuvor ein anderes Außengerät angeschlossen war.

Auf Grund einer steigenden Nachfrage, langen Lieferzeiten und/oder steigender Kosten von Wärmepumpensystemen sowie deren Einzelteilen kann es vermehrt zu Diebstählen von (leicht zugänglichen) Außengeräten kommen. Die teilweise einfach erreichbaren und demontierbaren Außengeräte können beispielsweise als Einzelteile weiterverkauft werden. Sie können aber auch an andere Innengeräte angeschlossen werden, die beispielsweise als Ersatzteil erworben wurden. Daher besteht ein gesteigertes Interesse an einem Diebstahlschutz.

Maßnahmen zur Diebstahlsicherung umfassen üblicherweise verschraubbare, schwer lösbare und/oder verstärkte Verankerungen der Außengeräte im Boden. Alle diese Maßnahmen umfassen derzeit jedoch mechanische Vorrichtungen, die mit relativ einfachen technischen Mittel umgangen oder überwunden werden können.

Die DE 10 2020 112 811 B3 offenbart ein weiteres Verfahren zur Authentifizierung wenigstens eines Aggregats einer Anlage, die außerdem eine zentrale Steuerung aufweist. Dabei wird in der zentralen Steuerung ein Zufallswert bereitgestellt, wobei das Aggregat eine Antwort mittels einer Rechenoperation bereitstellt. In einem darauffolgenden Schritt wird durch die zentrale Steuerung überprüft, ob die Antwort korrekt ist.

Hiervon ausgehend ist es Aufgabe der Erfindung, die mit Bezug auf den Stand der Technik geschilderten Probleme zumindest teilweise zu lösen. Insbesondere sollen Möglichkeiten geschaffen werden, die die Wahrscheinlichkeit eines Diebstahles von Außengeräten verringern. Es soll insbesondere eine Möglichkeit geschaffen werden, die eine nicht autorisierte Wiederverwertung eines (gestohlenen) Außengeräts erschwert oder sogar verhindert.

Diese Aufgabe wird durch die Merkmale der unabhängigen Ansprüche gelöst. Weitere vorteilhafte Ausgestaltungen der Erfindung sind in den abhängigen Ansprüchen angegeben. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Zur Lösung dieser Aufgabe trägt ein Verfahren zur Initiierung des Betriebs eines Wärmepumpensystems, mit zumindest einem Innengerät zur Aufstellung in einem Gebäude und einem Außengerät außerhalb des Gebäudes, umfassend zumindest die folgenden Schritte:
a. Bereitstellen einer ersten Signatur in dem Innengerät;
b. Speichern der ersten Signatur auf einem ersten Speicher des Innengeräts;
c. Berechnen einer zweiten Signatur aus der ersten Signatur mit einer Recheneinheit des Innengeräts;
d. Übertragen der zweiten Signatur vom Innengerät auf das Außengerät;
e. Speichern der zweiten Signatur in einem zweiten Speicher des Außengeräts,
wobei nach einer Durchführung der Schritte a. bis e. im Rahmen einer Inbetriebnahme des Wärmepumpensystems folgende Schritte durchgeführt werden:
A. Prüfen, ob erste Signatur und zweite Signatur übereinstimmen;
B. Blockieren des Betriebs des Wärmepumpensystems, wenn erste Signatur und zweite Signatur nicht übereinstimmen;
C. Ausgeben eines Hinweises, dass ein Betrieb des Wärmepumpensystems blockiert ist.

Die Schritte a. bis e. des Verfahrens können im Rahmen einer erstmaligen Inbetriebnahme eines Wärmepumpensystems durchgeführt werden, beispielsweise vor oder (unmittelbar) nach einer Installation an/in einem Gebäude.

Die Bereitstellung der ersten Signatur in Schritt a. kann im Rahmen einer Datenübertragung und/oder einer Berechnung erfolgen. Falls die erste Signatur hin zum Innengerät übertragen wird, kann diese eingegeben, eingelesen, eingescannt oder (gesichert) per Funk übergeben werden. Alternativ oder zusätzlich kann das Innengerät mit Mitteln ausgestattet sein, um die erste Signatur zu berechnen, beispielsweise auf Basis einer übertragenen ersten Primärsignatur (Produktcode). Eine Berechnung der ersten Signatur kann mit Hilfe eines Verschlüsselungsalgorithmus erfolgen, der durch ein Computerprogramm auf einer Recheneinheit des Innengeräts ausgeführt wird. Die erste Signatur kann als (zufällige) Zahlenkombination ausgestaltet sein. Die erste Signatur ist insbesondere für (alle) Innengeräte (dieser Systemreihe) einzigartig bzw. individuell.

Die erste Signatur kann in Schritt b. so auf einem ersten Speicher des Innengeräts gespeichert werden, insbesondere so dass sie nicht unerlaubt bzw. unverschlüsselt einlesbar ist. Der erste Speicher ist bevorzugt ein persistenter (Daten-)Speicher. Ein Speicher ist persistent, wenn er die Fähigkeit hat, Daten, Objektmodelle oder logische Verbindungen über längere Zeiträume hinweg verlustfrei zu bewahren. Die erste Signatur befindet sich somit im ersten Speicher des Innengeräts. Der Speicher ist insbesondere in dem Gehäuse des Innengeräts verbaut bzw. geschützt angeordnet. Die Signatur kann insbesondere so auf dem Speicher des Innengeräts gespeichert sein, dass sie auch bei einem Zugriff auf die Recheneinheit des Innengeräts nicht einlesbar ist, ohne eine Verschlüsselung zu brechen.

Sollte es dennoch einem unautorisierten Dritten möglich sein, die erste Signatur eines Innengerätes von außen abzufragen oder abzufangen, so ist lediglich ein (einziges) Innengerät kompromittiert. Die erste Signatur kann insbesondere eine so genannte "private" Signatur sein. Der unautorisierte Dritte hat auf das in einem Gebäude befindliche Innengerät aber auch in diesem Fall keinen direkten Zugriff.

Weiter erfolgt gemäß Schritt c. eine Generierung einer zweiten Signatur aus der ersten Signatur mit der Recheneinheit des Innengeräts, wobei im Rahmen der Generierung bzw. Berechnung ein Verschlüsselungsalgorithmus (Authentifizierungsalgorithmus) eingesetzt bzw. verwendet werden kann. Ein Computerprogramm in der Recheneinheit des Innengeräts kann den Verschlüsselungsalgorithmus ausführen. Als Verschlüsselungsalgorithmus kann einer aus einer Vielzahl bekannter Verschlüsselungsverfahren verwendet werden. Die erste Signatur und die zweite Signatur stellen bevorzugt so genannte asymmetrische Schlüssel dar.

Das Übertragen der zweiten Signatur vom Innengerät auf das Außengerät gemäß Schritt d. kann bevorzugt über mindestens eine Leitung (Datenkabel) erfolgen, über die das Innengerät und das Außengerät miteinander verbunden sind. Es ist (ggf. alternativ) möglich, die Übertragung kontaktlos durchzuführen, beispielsweise über ein kabelloses Netzwerk dargestellt. Ein kabelloses Funknetzwerk kann dabei insbesondere durch ein drahtloses lokales oder öffentliches Funknetzwerk dargestellt werden.

Der Verschlüsselungsalgorithmus ist bevorzugt so gewählt, dass die Übertagung der zweiten Signatur Ende-zu-Ende verschlüsselt ist. Bei der Übertragung kann eine Zufallszahl versendet werden. So soll auch bei einer Unterwanderung der Übertagung die zweite Signatur nicht offen auslesbar und/oder manipulierbar sein. Eine Brechung der Verschlüsselung soll insbesondere nur dann möglich sein, wenn die erste Signatur bekannt ist.

Gemäß Schritt e. erfolgt die Speicherung der zur ersten Signatur passenden zweiten Signatur in einem (bevorzugt ebenfalls persistenten) zweiten Speicher des Außengerätes. In jedem Außengerät solcher Wärmepumpensysteme ist damit eine andere bzw. einzigartige zweite Signatur abgespeichert.

Der Zugriff zu dem Speicher des Außengeräts kann zudem gesichert sein. Es können technische Sicherheitsmaßnahmen verwendet werden, die den Zugriff auf den zweiten Speicher, der insbesondere innerhalb eines Gehäuses des Außengeräts positioniert ist, schützen und somit unterbinden. Bevorzugt werden technische Sicherheitsmaßnahmen am bzw. im Außengerät geschaffen, die verhindern können, dass der zweite Speicher gelöscht und/oder überschrieben wird. Diese Maßnahme reduziert die Gefahr, dass das Außengerät einem ersten Wärmepumpensystem entnommen und nach einer Löschung und/oder Überschreibung des zweiten Speichers als Ersatzteil einem zweiten Wärmepumpensystem hinzugefügt wird.

Nach einem einmaligen bzw. erstmaligen Durchlauf der Schritte a. bis e. sind Außengerät und Innengerät über die Signaturen eindeutig zugeordnet, auch als "verheiratet" oder "gepaart" bezeichnet. Die Schritte a. bis e. können als Prozess des Einrichtens oder des "Pairing" bezeichnet werden.

Die Schritte A. bis C. können bei einer bzw. jeder Inbetriebnahme des Wärmepumpensystems durchgeführt werden, bei dem die Schritte a. bis e. bereits erfolgreich absolviert wurden, folglich die erste Signatur beim Innengerät und die (zugehörige) zweite Signatur beim Außengerät gespeichert ist.

Die Schritte A. bis C. können bei einem jeden Neustart des Wärmepumpensystems durchgeführt werden. Ein Neustart kann beispielsweise nach einem manuellen Ausschalten, nach einem Stromausfall und/oder nach einem technischen Defekt des Wärmepumpensystems vorliegen.

Gemäß Schritt A. erfolgt eine Prüfung, ob die erste Signatur und die zweite Signatur übereinstimmen. Beispielsweise kann die Recheneinheit des Innengeräts mit dem Außengerät kommunizieren und eine Antwort des Außengeräts mit der zweiten Signatur anfordern (oder umgekehrt). Mit dem Verschlüsselungsalgorithmus kann die Recheneinheit des Innengeräts verifizieren, dass die zweite Signatur zur ersten Signatur passt (Vergleich) und somit das Außengerät und das Innengerät zusammengehören. Somit ist es möglich, mit dem Verschlüsselungsalgorithmus sowohl die zweite Signatur aus der ersten Signatur zu generieren als auch zu prüfen, ob die erste Signatur und die generierte zweite Signatur zusammengehören.

Bei der Prüfung und dem Informationsaustausch zwischen Außengerät und Innengerät wird bevorzugt eine Ende-zu-Ende Verschlüsselung verwendet. Es wird beispielsweise eine Zufallszahl versendet. So kann ein Mitschneiden einer vorhergegangenen Kommunikation bei einem früheren Neustart nicht zu einer Manipulation des Wärmepumpensystems mit einem fremden Außengerät verwendet werden. Ein Antworten mit einer solchen ehemaligen versendeten Zufallszahl wird durch den Verschlüsselungsalgorithmus blockiert und führt nicht zu einem Neustart des Wärmepumpensystems.

Ergibt sich aus Schritt A, dass die Signaturen übereinstimmen, kann der Neustart des Wärmepumpensystems und damit deren ordnungsgemäßer Betrieb durchgeführt werden. Die Schritte B. und C. würden in diesem Fall nicht ausgeführt werden.

Gemäß Schritt B. wird der Betrieb des Wärmepumpensystems blockiert, wenn als Ergebnis des Schrittes A. festgestellt wird, dass die erste Signatur und die zweite Signatur nicht übereinstimmen. Dabei wird das System bevorzugt so blockiert, dass alle (wesentlichen) Funktionen des Wärmepumpensystems, die eine Abgabe einer Heizleistung und/oder Kühlleistung ermöglichen, nicht nutzbar sind. Eine Blockade erfolgt insbesondere softwareseitig bzw. durch die Recheneinheit des Innengeräts und/oder durch eine Prüfeinheit des Außengeräts.

Gemäß Schritt C. und insbesondere im Anschluss an Schritt B. wird ein Hinweis ausgegeben, dass ein Betrieb des Wärmepumpensystems blockiert ist. So ist es möglich zu erkennen, dass das Wärmepumpensystem nicht aufgrund eines technischen Defekts blockiert ist, sondern, dass erste Signatur und zweite Signatur und folglich auch Außen- und Innengerät des installierten Wärmepumpensystems nicht zusammenpassen. Der Hinweis kann allein in der Recheneinheit registriert, über eine (fest installierte und/oder mobile) Anzeige einem Benutzer angezeigt und/oder einer übergeordneten Recheneinheit (z.B. Cloud) mitgeteilt werden. Auf Basis dieses Hinweises können weitere Maßnahmen zur Fehlerergründung und/oder -beseitigung (automatisiert) ablaufen.

Alternativ oder kumulativ ist es möglich, dass die Prüfeinheit des Außengeräts den Hinweis ausgibt, dass ein Betrieb des Wärmepumpensystems blockiert ist.

Bevorzugt prüft also das Außengerät die Authentizität des Innengerätes, indem es mit diesem kommuniziert und die Antwort mittels des öffentlichen Schlüssels verifiziert. Wenn das Außengerät feststellt, es kommuniziert mit einem anderem als dem eingangs gepaarten Innengerät, so löst das Außengerät zuerst die Blockade aus.

Im Rahmen von Schritt A. kann geprüft werden, ob das Außengerät und/oder das Innengerät über keine gespeicherte Signatur verfügen. Diese Abfrage ermöglicht insbesondere festzustellen, ob das "Pairing" ordnungsgemäß abgelaufen ist - ist dies nicht der Fall, verfügt zumindest eines der Geräte nämlich über keinen Eintrag. Dann wäre dies ggf. noch durchzuführen bzw. zu vollenden. In Abhängigkeit des Ergebnisses der Abfrage können (automatisch) folgende Schritte veranlasst werden:
- das Verfahren läuft beginnend mit Schritt c. erneut ab, wenn das Außengerät über keine gespeicherte zweite Signatur verfügt;
- das Verfahren läuft beginnend mit Schritt a. erneut ab, wenn das Innengerät (auch) über keine gespeicherte erste Signatur verfügt.

Es ist möglich, dass ein (neues) Außengerät als Ersatzteil einem bestehenden Wärmepumpensystem hinzugefügt wird. Beispielsweise bei einem Defekt eines Außengeräts kann es durch ein Ersatzteil ersetzt werden. Ein Außengerät als Ersatzteil verfügt werksseitig über einen (leeren) zweiten Speicher, auf dem noch keine zweite Signatur gespeichert ist. Ein Ersatzteil kann somit über einen leeren Speicher erkannt werden. Sollte folglich ein (neues) Außengerät in ein Wärmepumpensystem eingebunden werden, so wird das Verfahren mit Schritt c. begonnen und erneut durchgeführt. So erhält das Außengerät eine zweite Signatur, die in dessen zweitem Speicher gespeichert wird. Dadurch wird das Außengerät in das bestehende Wärmepumpensystem eingebunden. Die Einbindung eines bereits in einem anderen Wärmepumpensystem mit einer zweiten Signatur versehenen Außengeräts kann so verhindert werden, denn diese Finalisierung wird nur bei einem leeren zweiten Speicher initiiert.

Es ist möglich, dass das Innengerät als Ersatzteil einem bestehenden Wärmepumpensystem hinzugefügt wird. Beispielsweise bei einem Defekt eines Innengeräts kann es durch ein Ersatzteil ersetzt werden. Ein Innengerät als Ersatzteil verfügt werksseitig über einen (leeren) ersten Speicher, auf dem noch keine erste Signatur gespeichert ist. Ein (reguläres) Ersatzteil kann somit über den leeren Speicher erkannt werden. Sollte ein (neues) Innengerät in ein Wärmepumpensystem eingebunden werden, so wird das Verfahren mit Schritt a. begonnen und erneut durchgeführt.

Das Bereitstellen der ersten Signatur erfolgt beim Ersatz eines Innengeräts vorzugsweise so, dass der Produktcode des bereits in dem Wärmepumpensystem befindlichen und auszutauschenden Innengeräts in dem neuen Innengerät eingegeben wird. So ist es für das neue Innengerät für das bereits im Wärmepumpensystem befindliche Außengerät als das korrespondierende Innengerät unmittelbar erkennbar.

Es ist möglich, dass sowohl das Innengerät als auch das Außengerät als Ersatzteile in einem bestehenden Wärmepumpensystem hinzugefügt werden. Dann wird das Verfahren mit Schritt a. begonnen und erneut durchgeführt.

Es ist möglich, über das Verfahren weitere Komponenten des Wärmepumpensystems zu schützen, die leicht zugänglich angeordnet sind und mit einfachen mechanischen Mitteln abgebaut werden können. So können weitere Bauteile in dem Außengerät mit dem Verfahren geschützt werden. Beispielsweise wäre es so möglich, eine Elektronik eines in dem Außengerät verbauten Inverters zu schützen.

Gemäß einem weiteren Aspekt wird ein Wärmepumpensystem vorgeschlagen, welches zumindest ein Innengerät zur Aufstellung in einem Gebäude und ein Außengerät zur Aufstellung außerhalb des Gebäudes aufweist und Mittel, die eingerichtet sind, das Verfahren auszuführen.

Das Wärmepumpensystem umfasst das Innengerät und das Außengerät, wobei das Innengerät das Wärmepumpensystem mit einer Regel- und Steuereinheit steuern kann. Die Regel- und Steuereinheit kann eine Recheneinheit mit einem ersten Speicher aufweisen, auf dem die erste Signatur gespeichert werden kann. Das Außengerät kann mit dem Innengerät über mindestens eine Leitung verbunden sein. Im Außengerät kann eine Prüfeinheit für den zweiten Speicher vorgesehen sein, auf dem die zweite Signatur gespeichert werden kann.

Alternativ oder kumulativ ist es möglich, dass das Wärmepumpensystem das Innengerät und das Außengerät umfasst, wobei das Außengerät das Wärmepumpensystem mit der Prüfeinheit verifizieren kann. Die Prüfeinheit kann einen zweiten Speicher aufweisen, auf dem die zweite Signatur gespeichert werden kann. Das Außengerät kann mit dem Innengerät über mindestens eine Leitung verbunden sein. Im Innengerät kann die Recheneinheit für den ersten Speicher vorgesehen sein, auf dem die erste Signatur gespeichert werden kann.

Die mindestens eine Leitung kann insbesondere zum Datenaustausch zwischen Innengerät und Außengerät dienen. Auch können (parallel und/oder in einem gemeinsamen Leitungstrakt) Leitungen für Wärmeträgermedien und/oder Strom vorhanden sein, die die Außeneinheit und die Inneneinheit miteinander verbinden.

Die Erläuterungen zum Verfahren können auch zur Charakterisierung des Wärmepumpensystems herangezogen werden, und umgekehrt. Insbesondere kann das Wärmepumpensystem eingerichtet sein, das hier vorgeschlagenen Verfahren (automatisch) durchzuführen.

Weiter wird ein Computerprogramm vorgeschlagen, umfassend Befehle, die bewirken, dass mit dem Wärmepumpensystem die Verfahrensschritte ausgeführt werden. Schließlich wird ein computerlesbares Medium vorgeschlagen, auf dem das Computerprogramm gespeichert ist.

Die Erfindung und das technische Umfeld werden nachfolgend anhand von einer Figur näher erläutert. Die Darstellung ist schematisch und nicht zur Veranschaulichung von Größenverhältnissen vorgesehen. Die mit Bezug auf einzelne Details der Figur angeführten Erläuterungen sind extrahierbar und mit Sachverhalten aus der vorstehenden Beschreibung frei kombinierbar, es sei denn, dass sich für einen Fachmann zwingend etwas anderes ergibt, bzw. eine solche Kombination explizit ausgeschlossen wird.

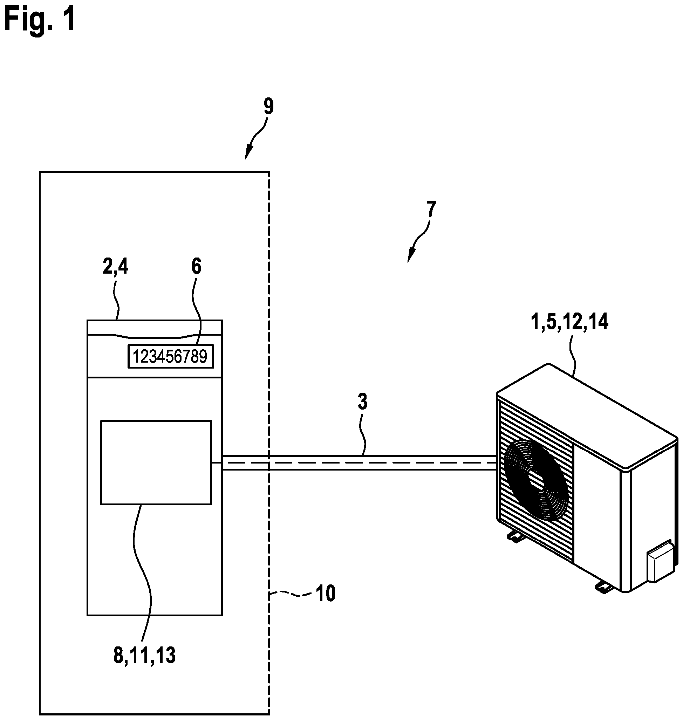

Fig. 1 zeigt schematisch eine Ansicht eines Wärmepumpensystems 7 mit Außengerät 1 und Innengerät 2. Auf dem Innengerät 2 ist eine erste Signatur 4 gespeichert, die mit einem Produktschlüssel 6 des Innengeräts 2 berechnet werden kann. Auf dem Außengerät 1 ist eine zweite Signatur 5 gespeichert, die mit der ersten Signatur 4 berechnet werden kann. Das Außengerät 1 und das Innengerät 2 sind über Leitungen 3 verbunden, die durch eine Gebäudewand 10 verlaufen. Das Innengerät 1 ist innerhalb eines Gebäudes 9 angeordnet. Das Außengerät 1 ist außerhalb des Gebäudes 9 angeordnet. In dem Innengerät 2 ist eine Regel- und Steuereinheit 8 angeordnet, die auch über die Leitungen 3 mit dem Außengerät 1 verbunden ist.

Das Innengerät 2 weist zudem eine Recheneinheit 11 mit einem ersten Speicher 13 auf. Das Außengerät 1 weist zudem eine Prüfeinheit 14 mit einem zweiten Speicher 12 auf.

Das hier gezeigte Wärmepumpensystem 7 ist eingerichtet, das hier offenbarte Verfahren auszuführen und damit einen effizienten Diebstahlschutz hinsichtlich des Außengeräts zu realisieren sowie gleichzeitig einen einfachen und komfortablen Austausch von autorisierten Ersatzgeräten zu gewährleisten.

### Bezugszeichenliste

- 1: Außengerät
- 2: Innengerät
- 3: Leitungen
- 4: erste Signatur
- 5: zweite Signatur
- 6: Produktschlüssel
- 7: Wärmepumpensystem
- 8: Regel- und Steuereinheit
- 9: Gebäude
- 10: Gebäudewand
- 11: Recheneinheit
- 12: zweiter Speicher
- 13: erster Speicher
- 14: Prüfeinheit

## Patentansprüche

1. Verfahren zur Initiierung des Betriebs eines Wärmepumpensystems (7), mit zumindest einem Innengerät (2) zur Aufstellung in einem Gebäude (9) und einem Außengerät (1) außerhalb des Gebäudes (9), umfassend zumindest die folgenden Schritte:
a. Bereitstellen einer ersten Signatur (4) in dem Innengerät (2);
b. Speichern der ersten Signatur (4) auf einem ersten Speicher (13) des Innengeräts (2);
c. Berechnen einer zweiten Signatur (5) aus der ersten Signatur (4) mit einer Recheneinheit (11) des Innengeräts (2);
d. Übertragen der zweiten Signatur (5) vom Innengerät (2) auf das Außengerät (1);
e. Speichern der zweiten Signatur (5) in einem zweiten Speicher (12) des Außengeräts (1),
wobei nach einer Durchführung der Schritte a. bis e. im Rahmen einer Inbetriebnahme des Wärmepumpensystems folgende Schritte durchgeführt werden:
A. Prüfen, ob erste Signatur (4) und zweite Signatur (5) übereinstimmen;
B. Blockieren des Betriebs des Wärmepumpensystems (7), wenn erste Signatur (4) und zweite Signatur (5) nicht übereinstimmen;
C. Ausgeben eines Hinweises, dass ein Betrieb des Wärmepumpensystems (7) blockiert ist.

2. Verfahren nach dem vorherigen Anspruch, wobei bei Schritt A. geprüft wird, ob das Außengerät (1) und/oder das Innengerät (2) über keine gespeicherte Signatur verfügen, wobei:
- das Verfahren beginnend mit Schritt c. erneut abläuft, wenn das Außengerät (1) über keine gespeicherte zweite Signatur (5) verfügt;
- das Verfahren beginnend mit Schritt a. erneut abläuft, wenn das Innengerät (2) über keine gespeicherte erste Signatur (4) verfügt.

3. Verfahren nach einem der vorherigen Ansprüche, wobei die zweite Signatur (5) über die erste Signatur (4) mit einem Verschlüsselungsalgorithmus berechnet wird.

4. Wärmepumpensystem (7), mit zumindest einem Innengerät (2) zur Aufstellung in einem Gebäude (9) und einem Außengerät (1) zur Aufstellung außerhalb des Gebäudes (9) und Mitteln, die eingerichtet sind, ein Verfahren nach einem der vorhergehenden Ansprüche auszuführen.

5. Wärmepumpensystem (7), umfassend das Innengerät (2) und das Außengerät (1), wobei das Innengerät (2) das Wärmepumpensystem (7) mit einer Regel- und Steuereinheit (8) steuern kann, wobei die Regel- und Steuereinheit (8) eine Recheneinheit (11) mit einem ersten Speicher (13) aufweist, auf dem die erste Signatur (4) gespeichert werden kann, wobei das Außengerät (1) mit dem Innengerät (2) über mindestens eine Leitung (3) verbunden ist und eine Prüfeinheit (14) mit einem zweiten Speicher (12) aufweist, auf dem die zweite Signatur (5) gespeichert werden kann.

6. Wärmepumpensystem (7) nach Anspruch 4 und 5, wobei die mindestens eine Leitung (3) zum Datenaustausch zwischen Innengerät (2) und Außengerät (1) vorhanden ist.

7. Computerprogramm, umfassend Befehle, die bewirken, dass mit dem Wärmepumpensystem des Anspruchs 6 die Verfahrensschritte nach Anspruch 1 ausgeführt werden.

8. Computerlesbares Medium, auf dem das Computerprogramm nach Anspruch 7 gespeichert ist.
